# EUROPÄISCHE PATENTSCHRIFT

(11) **EP 2 979 902 B1**
(45) Veröffentlichungstag und Bekanntmachung des Hinweises auf die Patenterteilung: **18.04.2018**
(21) Anmeldenummer: 15169295.1
(22) Anmeldetag: 27.05.2015
(51) Int. Cl.: B60C 11/03, B60C 11/16, B60C 11/11, B60C 11/12

(54) **FAHRZEUGREIFEN**
VEHICLE TYRES
PNEU

(30) Priorität: 01.08.2014 DE 102014215249
(43) Veröffentlichungstag der Anmeldung: 03.02.2016
(73) Patentinhaber: Continental Reifen Deutschland GmbH, 30165 Hannover (DE)
(72) Erfinder: Brandau, Christian, 30419 Hannover (DE); Schlittenhard, Jan, 30900 Wedemark (DE); Seng, Matthias, 30449 Hannover (DE)
(74) Vertreter: Finger, Karsten

(56) Entgegenhaltungen:
- EP-A2- 0 139 606
- DE-A1-102009 044 767
- DE-U1- 8 809 532
- US-A- 4 351 381
- US-A1- 2004 231 775
- US-A1- 2013 240 100

## Beschreibung

Die Erfindung betrifft einen Fahrzeugreifen nach dem Oberbegriff des Patentanspruches 1.

Es ist bekannt, dass insbesondere Profile für Winterreifen und Fahrzeugreifen für den Einsatz im Gelände, also einem so genannten "Offroadeinsatz", eine stark strukturierte Profilgestaltung besitzen müssen, um einen ungehinderten "Durchblick" in longitudinaler Richtung durch das Profil zu minimieren, denn dieser "Durchblick" reduziert die Haftung auf dem Untergrund und vermindert die Traktions- und Bremseigenschaften der Fahrzeugreifen auf Untergründen mit geringer Reibung. Zur Minimierung des "Durchblickes" sind bereits vielfältige Möglichkeiten der Profilgestaltung bekannt, jedoch weisen diese stets den Nachteil auf, dass hierbei Ungleichmäßigkeiten der Quersteifigkeitsverteilung in einem Profilbereich auftreten. Besonders bei Fahrzeugreifen, die mit Spikes ausgerüstet werden sollen, kommt zu den bekannten Schwierigkeiten der Vergleichmäßigung der lateralen Profilsteifigkeit zur Verbesserung der Trockenfahreigenschaften und der Nassfahreigenschaften, die Herausforderung der Optimierung der wintergriffoptimierten Positionierung der Spikes in Kombination mit einer möglichst gleichmäßigen Quersteifigkeit des Profils hinzu. Der erwähnte "Durchblick" ist jedoch anderseits zur Verbesserung der Aquaplaningeigenschaften eines Sommerreifens wünschenswert.
Bislang werden bereits Fahrzeugreifen für Kraftfahrzeuge mit bis in die Seitenfläche des Fahrzeugreifens übergehenden Schulterblöcken ausgestattet, wobei, in Umfangsrichtung betrachtet, jeweils abwechselnd ein kurzer Schulterblock auf einen langen Schulterblock folgt. Im Bereich ihrer Bodenaufstandsfläche weisen derartige Fahrzeugreifen zudem mindestens eine, in Umfangsrichtung des Fahrzeugreifens verlaufende Blockreihe auf, die aus durch Nuten gegeneinander und gegenüber den Schulterblöcken abgegrenzten Profilblöcken im Bereich der durch eine geometrische Mittellinie geteilten Bodenaufstandsfläche besteht. Hierbei ist jedoch der erwähnte "Durchblick" mit seinen bereits genannten Nachteilen weiterhin vorhanden.

Die Druckschriften US 4 351 381 A, EP 0 139 606 A2 und DE 88 09 532 U1 offenbaren einen Fahrzeugreifen für ein Kraftfahrzeug, mit bis in die Seitenfläche des Fahrzeugreifens übergehenden Schulterblöcken, wobei, in Umfangsrichtung betrachtet, jeweils abwechselnd ein kurzer Schulterblock auf einen langen Schulterblock folgend angeordnet ist, und mehreren in Umfangsrichtung des Fahrzeugreifens verlaufenden Blockreihen, die durch Nuten gegeneinander und gegenüber den Schulterblöcken abgegrenzten Profilblöcke im Bereich einer durch eine geometrische Mittellinie geteilten Bodenaufstandsfläche aufweisen.
Weiterhin wird noch auf die Druckschriften US 2004/231 775 A1, US 2013/240100 A1 und DE 10 2009 044 767 A1 als Stand der Technik verwiesen.

Der Erfindung liegt die Aufgabe zugrunde, einen Fahrzeugreifen bereitzustellen, der eine möglichst gleichmäßige Quersteifigkeit und eine optimale Profilverzahnung beziehungsweise eine gleichmäßige Spikepositionierung aufweist und dabei ebenso über eine gleichmäßige Profilquersteifigkeit verfügt.

Die Erfindung löst diese Aufgabenstellung mit den Merkmalen des Patentanspruches 1. Weitere Ausgestaltungen der Erfindung sind Gegenstand der sich anschließenden Unteransprüche.

Ein Fahrzeugreifen für ein Kraftfahrzeug, mit bis in die Seitenfläche des Fahrzeugreifens übergehenden Schulterblöcken, bei dem, in Umfangsrichtung betrachtet, jeweils abwechselnd ein kurzer Schulterblock auf einen langen Schulterblock folgend angeordnet ist und der mindestens eine, in Umfangsrichtung des Fahrzeugreifens verlaufende Blockreihe mit durch Nuten gegeneinander und gegenüber den Schulterblöcken abgegrenzten Profilblöcken im Bereich einer durch eine geometrische Mittellinie geteilten Bodenaufstandsfläche aufweist, wurde erfindungsgemäß dahingehend weitergebildet, dass zwei in Umfangsrichtung des Fahrzeugreifens zueinander benachbarte und jeweils annähernd gleiche laterale Breiten aufweisende Profilblöcke einer Blockreihe, bezogen auf die geometrische Mittellinie des Fahrzeugreifens, einen lateralen Versatz zueinander aufweisen, sodass der laterale Versatz jeweils innerhalb einer Blockreihe vorliegt, wobei die Profilblöcke einer Blockreihe jeweils gleiche geometrische Grundformen aufweisen.

Dabei ist es erfindungsgemäß von wesentlicher Bedeutung, dass die Anordnung der Profilblöcke innerhalb einer Blockreihe den eingangs bereits erwähnten "Durchblick" durch das Profil des Fahrzeugreifens in longitudinaler Richtung verhindert. Mit einem Fahrzeugreifen nach der Erfindung können auf diese Weise die eingangs genannten Nachteile des Standes der Technik wirksam vermieden werden. So verfügt dieser über eine gleichmäßige Quersteifigkeit und gestattet eine optimale Profilverzahnung, was seine Haftung auf verschiedenen Untergründen verbessert. Ein erfindungsgemäßer Fahrzeugreifen ist darüber hinaus insbesondere auch als Winterreifen einsetzbar und kann mit Spikes ausgestattet werden, die zudem gleichmäßig positionierbarer sind. Ein besonderer Vorteil besteht darüber hinaus darin, dass der vorgestellte Fahrzeugreifen über eine gleichmäßige Profilquersteifigkeit verfügt. Dass der erfindungsgemäße Fahrzeugreifen mit Profilblöcken ausgestattet ist, die annähernd gleiche laterale Breiten aufweisen, ist ferner für seine Handhabung und seine Fahreigenschaften von besonderer Bedeutung, da hierdurch auch ein optimaler Gleichlauf des Fahrzeugreifens erreicht werden kann.

Eine erste Ausgestaltung der Erfindung geht dahin, dass der Fahrzeugreifen ein asymmetrischer Fahrzeugreifen ist, bei dem die Profilblöcke einer Hälfte der Bodenaufstandsfläche andere Geometrien aufweisen, als die Profilblöcke der anderen Hälfte der Bodenaufstandsfläche. Durch diese Maßnahme kann der Fahrzeugreifen auf jeder seiner, durch eine geometrische Mittellinie geteilten Seiten der Bodenaufstandsfläche unterschiedliche Fahreigenschaften aufweisen. So kann er zum Beispiel auf seiner auf die Laufrichtung bezogenen Außenseite Profilblöcke aufweisen, die insbesondere eine optimierte Querabstützung bewirken und gleichzeitig auf seiner Innenseite mit Profilblöcken ausgestattet sein, die vorwiegend für eine optimale Traktion sowie bestmögliche Bremseigenschaften sorgen.

Als Alternative zu dem asymmetrisch gestalteten Fahrzeugreifen geht eine weitere Ausführung dahin, dass das Profil des Fahrzeugreifens in dessen Laufrichtung betrachtet, insgesamt richtungsgebunden ist und bevorzugt ein symmetrisches Profil aufweist. Allgemeiner ausgedrückt bedeutet dies, dass das Profil entlang der geometrischen Mittellinie des Fahrzeugreifens gespiegelt ausgeführt ist. Besondere Bedeutung wird dabei dem Umstand beigemessen, dass neben der Spiegelung des Profils erfindungsgemäß gleichfalls ein Versatz in Laufrichtung des Fahrzeugreifens von Vorteil ist, was so zu verstehen ist, dass das Profil auf einer durch eine geometrische Mittellinie geteilten Seite der Bodenaufstandsfläche um einen definierten Betrag in Laufrichtung zu der anderen Hälfte der Bodenaufstandsfläche verschoben ist. Diese Verschiebung kann dabei zum Beispiel ein einem Profilblock oder einem halben Profilblock entsprechendes Maß betragen.
Hiervon losgelöst weist ein derartiger Fahrzeugreifen, insbesondere bei gleicher Ausführung der Profilblöcke innerhalb der Bodenaufstandsfläche, den Vorteil auf, dass bei seiner Herstellung sehr einfache Werkzeuge einsetzbar sind, was insgesamt zu einer fertigungstechnischen Vereinfachung und somit zu einer Reduzierung der Herstellungskosten führt. Wird dieser Fahrzeugreifen für den Winterbetrieb ausgestattet, so ergibt sich zudem die Möglichkeit einer gleichmäßigen Verteilung der Spikes, so dass insgesamt die Haftung, also der Grip, des Fahrzeugreifens verbessert und dadurch ein harmonisches Reaktionsvermögen des Fahrzeugreifens erreicht wird.

Ein ganz wesentlicher Beitrag zur Verbesserung der Laufeigenschaften eines Fahrzeugreifens wird entsprechend einer Weiterbildung der Erfindung dadurch erreicht, dass quer zur Umfangsrichtung des Fahrzeugreifens betrachtet, einem jeden kurzen Schulterblock der einen Seite, ein langer Schulterblock der gegenüberliegenden, anderen Seite zugeordnet ist, sodass die Summe der Quersteifigkeiten der Schulterblöcke in einem lateralen Profilabschnitt gleich der Summe der Quersteifigkeiten in einem in Umfangsrichtung des Fahrzeugreifens vorherigen oder nachfolgenden Profilabschnitt ist. Durch diese Maßnahme kann die Stabilität des Fahrzeugreifens insgesamt verbessert werden.

Bei der Gestaltung der Profilblöcke ist es in Abhängigkeit der zu erzielenden Eigenschaften möglich, die Profilblöcke beispielsweise mit polygonalen oder mit C-, beziehungsweise S-förmigen Geometrien auszustatten. In an sich bekannter Weise können die Profilblöcke zudem Lamellen aufweisen, die in die Profilblöcke eingeformt sind.

Der Versatz der einzelnen Profilblöcke entlang der Bodenaufstandsfläche des Fahrzeugreifens kann auch dergestalt ausfallen, dass zwischen zwei in Umfangsrichtung zueinander benachbarten Profilblöcken ausgebildete Quernuten mit der geometrischen Mittellinie des Fahrzeugreifens einen Winkel zwischen 13° und 90°, bevorzugt jedoch einen Winkel zwischen 30° und 70° einschließen. Anders ausgedrückt weisen die Profilblöcke eine Schrägstellung zur Mittellinie der Bodenaufstandsfläche auf, was beispielsweise die Aquaplaningneigung des Fahrzeugreifens auf nassen Untergründen reduziert, weil das in den Nuten vorhandene Wasser in verbesserter Weise abgeführt werden kann.

Die erfindungsgemäße Lösung, die Profilblöcke beziehungsweise die Schulterblöcke mit einem Versatz einander anzuordnen, führt dazu, dass die dadurch gebildete Profilstruktur des Fahrzeugreifens insgesamt verzahnungsartig ausgeführt ist. Durch diese Verzahnung ist der eingangs bereits als nachteilig herausgestellte "Durchblick" eliminierbar oder auf ein Mindestmaß reduzierbar.

Betrachtet man die einzelnen Profilblöcke einer Blockreihe, so ist es bekannt, diese mit unterschiedlichen Längen ihres Umfanges auszuführen, was damit auch zu unterschiedlich großen Flächen der Profilblöcke führt. Herkömmlicherweise werden die Profilblöcke in kurze, mittlere und lange Umfänge unterteilt, die sich in einem wiederkehrenden Muster entlang einer Blockreihe wiederholen können. Ein einzelner Profilblock mit einer an diesen angrenzenden Nut stellt dabei einen Umfangsabschnitt oder "pitch" des Fahrzeugreifens dar. Werden entsprechend einer weiteren Ausgestaltung der Erfindung mehrere Profilblöcke einer Blockreihe mit einer gleich großen Fläche ausgestattet, so lassen sich dadurch eine sehr gleichmäßige Verteilung der Profilblöcke und eine vorteilhafte Laufruhe sowie optimale Handhabungseigenschaften des Fahrzeugreifens erreichen. Die gleichmäßige Verteilung der Profilblöcke bietet wiederum fertigungstechnische Vorteile.

Ein Fahrzeugreifen nach der Erfindung kann in besonders vorteilhafter Weise als Winterreifen mit Spikebesatz zum Einsatz kommen und mit Spikes ausgestattet werden. Die in den Profilblöcken und/oder in den Schulterblöcken aufgenommenen Spikes werden in diesem Fall entlang in Umfangsrichtung des Fahrzeugreifens verlaufender, geometrischer Spikespuren angeordnet. Unter "Spikespuren" sind dabei geometrische Linien zu verstehen, die entlang der Umfangsrichtung des Fahrzeugreifens verlaufen, jedoch nicht am fertigen Produkt zu erkennen sind. Durch die Anordnung der Spikes entlang der Spikespuren wird im Winterbetrieb eine verbesserter Haftung des Fahrzeugreifens auf gefrorenen Untergrund erreicht.

Besonders vorteilhaft ist es dabei insbesondere, wenn die Spikespuren quer zur Umfangsrichtung des Fahrzeugreifens betrachtet in gleichmäßigen Abständen zueinander verlaufend angeordnet sind. Auf diese Weise lässt sich eine gleichmäßige und optimierte Verteilung der Spikes erreichen.

Diesem Gedanken folgend wird ferner vorgeschlagen, dass ein Spike jeweils im mittleren Bereich der Profilblöcke beziehungsweise der Schulterblöcke angeordnet ist. Dies führt dazu, dass jeder einzelne, in einem Profilblock oder in einem Schulterblock aufgenommene Spike einen festen Sitz aufweist und zuverlässig sowie dauerhaft in dem diesen aufnehmenden Profilblock oder Schulterblock fixiert ist.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Ausschnitt eines asymmetrischen Profils entsprechend einer ersten Ausführungsvariante eines Fahrzeugreifens,
- Figur 2:: einen Ausschnitt eines symmetrischen Profils entsprechend einer zweiten Ausführungsvariante eines Fahrzeugreifens
und
- Figur 3:: einen Ausschnitt eines Fahrzeugreifens gemäß Figur 2, jedoch mit darin angedeuteten Spikespuren.

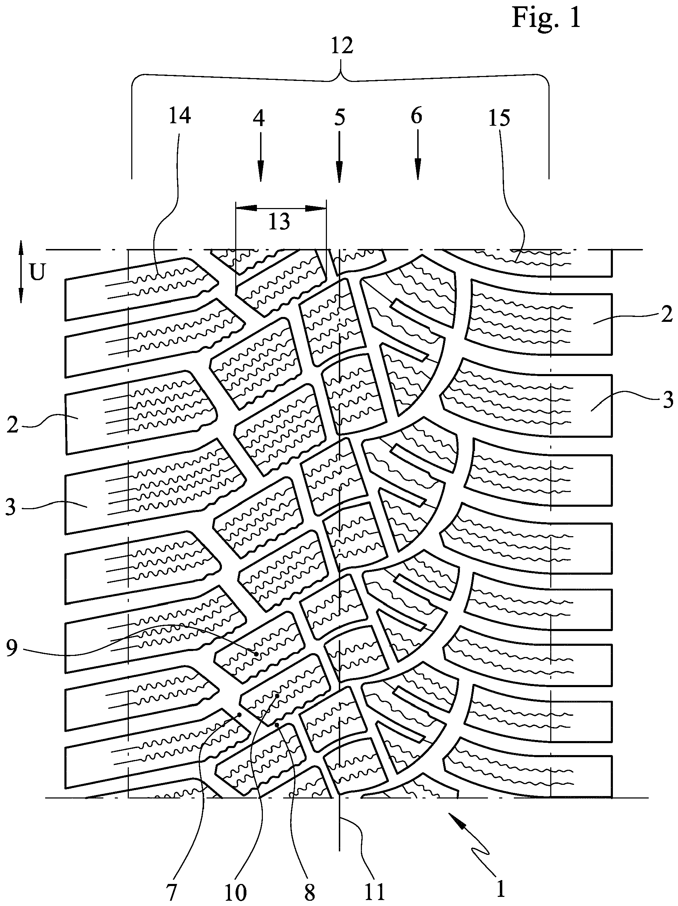

In der Figur 1 ist ein Ausschnitt eines asymmetrischen Profils entsprechend einer ersten Ausführungsvariante eines Fahrzeugreifens 1 dargestellt. Dieser weist zur Vereinfachung der Beschreibung eine geometrische Mittellinie 11 auf, die die Bodenaufstandsfläche 12 des Fahrzeugreifens 1 mittig teilt. Entlang der Randbereiche des Fahrzeugreifens 1 sind aufeinander folgend Schulterblöcke 2, 3 ausgebildet, wobei jeweils ein kurzer Schulterblock 2 auf einen langen Schulterblock 3 folgt.
Eine weitere, erfindungsgemäße Besonderheit besteht hier darin, dass entlang einer gedachten, geometrischen Linie, deren Verlauf quer zur Umfangsrichtung U des Fahrzeugreifens 1 ausgerichtet ist, jeweils ein kurzer Schulterblock 2 der einen Seite des Fahrzeugreifens 1 ein langer Schulterblock 3 der gegenüberliegenden Seite des Fahrzeugreifens 1 zugeordnet ist.
Zentral zwischen den Schulterblöcken 2 und 3 weist die Bodenaufstandsfläche 12 insgesamt drei Blockreihen 4, 5, 6 mit einer Vielzahl einzelner, als erhabene Struktur ausgebildeter Profilblöcke 9, 10 mit je einer lateralen Breite 13 auf. Dabei sind die Profilblöcke 9, 10 der Blockreihen 4 und 5 als polygonale Profile ausgeführt, während die Profilblöcke der Blockreihe 6 eine annähernd S-förmige Gestaltung aufweisen. Betrachtet man zum besseren Verständnis der erfindungsgemäßen Lösung nunmehr die Blockreihe 4, so ist erkennbar, dass jeweils zwei benachbarte Profilblöcke 9 und 10 durch eine Quernut 8 voneinander getrennt sind und seitlich der Profilblöcke 9, 10 jeweils Schrägnuten 7 vorhanden sind, so dass die Nuten 7, 8 insgesamt eine Abgrenzung der Profilblöcke 9, 10 untereinander sowie gegenüber den seitlich angeordneten Schulterblöcken 2, 3 gewährleisten. Folgt man gedanklich einer in Umfangsrichtung U des Fahrzeugreifens 1 und entlang der Blockreihe 4 verlaufenden geometrischen Linie, so fällt auf, dass jeweils zwei benachbart zueinander angeordnete Profilblöcke 9 und 10 einen seitlichen Versatz zueinander aufweisen. Dieser Versatz ergibt sich auch aus dem Umstand, dass die seitlich vorhandenen Schulterblöcke 2, 3 über abwechselnde Längen verfügen.
Sowohl die Schulterblöcke 2, 3, als auch die Profilblöcke 9, 10 einer jeden Blockreihe 4, 5, 6 weisen zudem jeweils Lamellen 14, 15 auf, deren Geometrie sich auch innerhalb eines Fahrzeugreifens 1 unterscheiden kann. So sind in der Figur 1 im linken Bildteil überwiegend Sinuslamellen 14 und im rechten Bildteil Steplamellen 15 in die Profilblöcke 9, 10 beziehungsweise in die Schulterblöcke 2, 3 eingeformt.

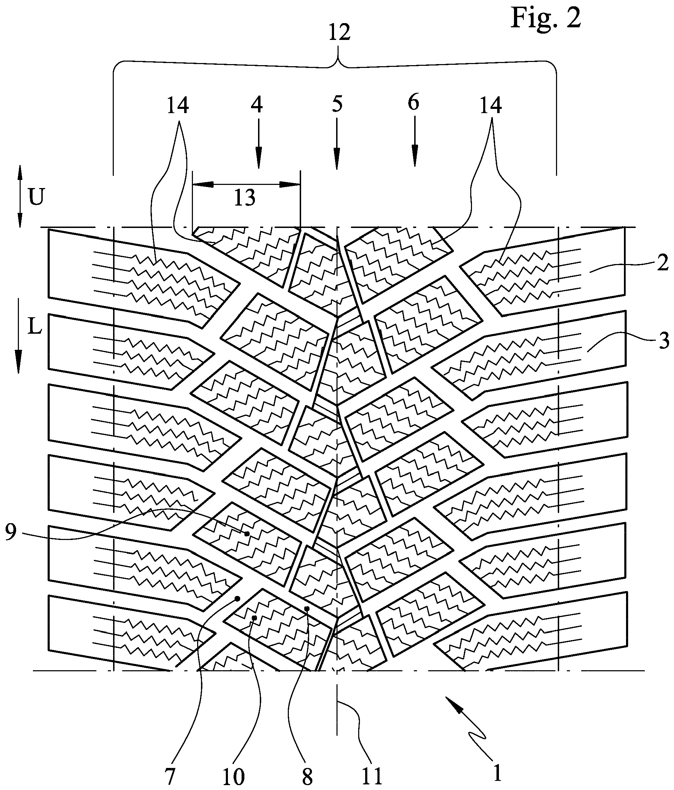

Die Figur 2 zeigt einen Ausschnitt eines symmetrischen und darüber hinaus richtungsgebundenen Profils entsprechend einer zweiten Ausführungsvariante eines Fahrzeugreifens 1. Eine Besonderheit des dargestellten Fahrzeugreifens 1 besteht hierbei darin, dass das Profil entlang der Mittellinie 11 gespiegelt ist und zudem in Laufrichtung L betrachtet, eine Verschiebung um annähernd einen Profilblock 9 beziehungsweise 10 aufweist. Dies hat zur Folge, dass die entlang der Mittellinie 11 verlaufende Blockreihe 5 über eine zu den Blockreihen 4 und 6 abweichende Gestaltung verfügt. Ein derartiges Profil eignet sich in vorteilhafter Weise für einen Winterreifen, weil sich hieraus die Möglichkeit einer gleichmäßigen Spikeverteilung und damit die Verbesserung der Griffigkeit des Fahrzeugreifens 1 sowie eine harmonische Reaktion desselben ergibt.

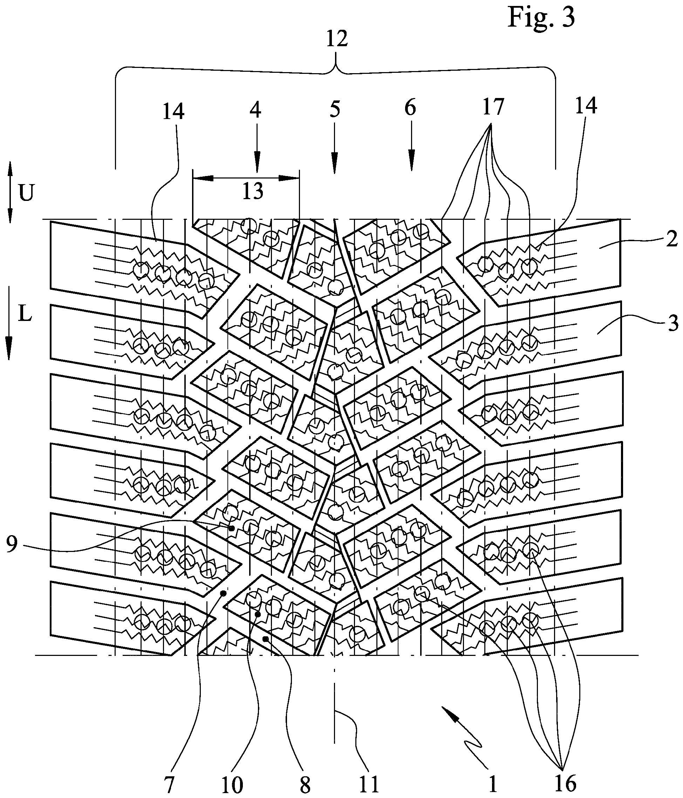

Aus der Figur 3 geht ein Ausschnitt eines Fahrzeugreifens 1 hervor, bei dem im Unterschied zu der Ausführung in Figur 2 mögliche Spikepositionen 16 dargestellt sind. Diese Spikepositionen 16 befinden sich entlang parallel zueinander und quer zur Umfangsrichtung U des Fahrzeugreifens 1, in gleichmäßigen Abständen zueinander verlaufender Spikespuren 17, wobei anzumerken ist, dass der Fahrzeugreifen 1 von den in der Figur 3 dargestellten, besetzbaren Spikepositionen 16 tatsächlich jeweils nur eine Spikeposition mit einem Spike versehen wird, da in jedem Profilblock 9, 10 beziehungsweise Schulterblock 2, 3 in der Regel nur ein Spike eingesetzt ist. Zu beachten ist dabei ferner, dass diese Spikeposition 16 vorwiegend zentral innerhalb der Profilblöcke 9, 10 beziehungsweise der Schulterblöcke 2, 3 angeordnet ist, was zur Folge hat, dass jeder Spike festsitzend in dem Gummiwerkstoff des Fahrzeugreifens 1 fixiert und von einer ausreichenden Menge Gummiwerkstoff umgeben ist. Die Profilblöcke 9, 10 weisen auch hierbei gleich bleibende, sehr ähnliche Breiten auf und verfügen somit über eine für die Handhabungseigenschaften des Fahrzeugreifens 1 besonders wichtige, gleichmäßige laterale Profilsteifigkeit. So wird mit einfachen Mitteln eine optimale Verzahnung des Profils mit dem Untergrund und eine besonders homogene, wintergriffoptimierte Spikepositionierung ermöglicht.

### Bezugszeichenliste:

- 1: Fahrzeugreifen
- 2: Schulterblock (kurz)
- 3: Schulterblock (lang)
- 4: Blockreihe
- 5: Blockreihe
- 6: Blockreihe
- 7: Nut (Schrägnut)
- 8: Nut (Quernut)
- 9: Profilblock
- 10: Profilblock
- 11: geometrische Mittellinie
- 12: Bodenaufstandsfläche
- 13: laterale Breite
- 14: Lamelle (Sinuslamelle)
- 15: Lamelle (Steplamelle)
- 16: Spikeposition
- 17: Spikespur

## Patentansprüche

1. Fahrzeugreifen (1) für ein Kraftfahrzeug, mit:
- bis in die Seitenfläche des Fahrzeugreifens (1) übergehenden Schulterblöcken (2, 3), wobei, in Umfangsrichtung (U) betrachtet, jeweils abwechselnd ein kurzer Schulterblock (2) auf einen langen Schulterblock (3) folgend angeordnet ist,
- mindestens einer, in Umfangsrichtung (U) des Fahrzeugreifens (1) verlaufenden Blockreihe (4, 5, 6), die durch Nuten (7, 8) gegeneinander und gegenüber den Schulterblöcken (2, 3) abgegrenzte Profilblöcke (9, 10) im Bereich einer durch eine geometrische Mittellinie (11) geteilten Bodenaufstandsfläche (12) aufweist, **dadurch gekennzeichnet, dass**
zwei in Umfangsrichtung (U) des Fahrzeugreifens (1) zueinander benachbarte und jeweils annähernd gleiche laterale Breiten (13) aufweisende Profilblöcke (9, 10) einer Blockreihe (4, 5, 6), bezogen auf die geometrische Mittellinie (11) des Fahrzeugreifens (1), einen lateralen Versatz zueinander aufweisen, sodass der laterale Versatz jeweils innerhalb einer Blockreihe (4, 5, 6) vorliegt, wobei die Profilblöcke (9, 10) einer Blockreihe (4, 5, 6) jeweils gleiche geometrische Grundformen aufweisen.

2. Fahrzeugreifen nach Anspruch 1,
**dadurch gekennzeichnet, dass**
der Fahrzeugreifen (1) ein asymmetrischer Fahrzeugreifen (1) ist, bei dem die Profilblöcke (9, 10) einer Hälfte der Bodenaufstandsfläche (12) andere Geometrien aufweisen, als die Profilblöcke (9, 10) der anderen Hälfte der Bodenaufstandsfläche (12).

3. Fahrzeugreifen nach Anspruch 1,
**dadurch gekennzeichnet, dass**
das Profil des Fahrzeugreifens (1) in dessen Laufrichtung (L) betrachtet, insgesamt richtungsgebunden ist.

4. Fahrzeugreifen nach Anspruch 1 oder 2,
**dadurch gekennzeichnet, dass**
quer zur Umfangsrichtung (U) des Fahrzeugreifens (1) betrachtet, einem jeden kurzen Schulterblock (2) der einen Seite, ein langer Schulterblock (3) der gegenüberliegenden, anderen Seite zugeordnet ist, sodass die Summe der Quersteifigkeiten der Schulterblöcke (2, 3) in einem lateralen Profilabschnitt gleich der Summe der Quersteifigkeiten in einem in Umfangsrichtung (U) des Fahrzeugreifens (1) vorherigen oder nachfolgenden Profilabschnitt ist.

5. Fahrzeugreifen nach einem der vorstehend genannten Ansprüche,
**dadurch gekennzeichnet, dass**
die Profilblöcke (9, 10) polygonale, C- oder S-förmige Geometrien mit darin eingebrachten Lamellen (14, 15) aufweisen.

6. Fahrzeugreifen nach einem der vorstehend genannten Ansprüche,
**dadurch gekennzeichnet, dass**
zwischen zwei benachbarten Profilblöcken (9, 10) ausgebildete Quernuten (8) mit der geometrischen Mittellinie (11) des Fahrzeugreifens (1) einen Winkel zwischen 13° und 90° einschließen.

7. Fahrzeugreifen nach einem der vorstehend genannten Ansprüche,
**dadurch gekennzeichnet, dass**
zwischen zwei benachbarten Profilblöcken (9, 10) ausgebildete Quernuten (8) mit der geometrischen Mittellinie (11) des Fahrzeugreifens (1) einen Winkel zwischen 30° und 70° einschließen.

8. Fahrzeugreifen nach einem der vorstehend genannten Ansprüche,
**dadurch gekennzeichnet, dass**
die Profilstruktur des gesamten Fahrzeugreifens (1) insgesamt verzahnungsartig ausgeführt ist.

9. Fahrzeugreifen nach einem der vorstehend genannten Ansprüche,
**dadurch gekennzeichnet, dass**
mehrere Profilblöcke (9, 10) einer Blockreihe (4, 5, 6) eine gleich große Fläche aufweisen.

10. Fahrzeugreifen nach einem der vorstehend genannten Ansprüche,
**dadurch gekennzeichnet, dass**
der Fahrzeugreifen (1) ein Winterreifen mit Spikebesatz ist und die in den Profilblöcken (9, 10) und/oder in den Schulterblöcken (2, 3) aufgenommenen Spikes (16) entlang in Umfangsrichtung (U) des Fahrzeugreifens (1) verlaufender, geometrischer Spikespuren (17) angeordnet sind.

11. Fahrzeugreifen nach Anspruch 10,
**dadurch gekennzeichnet, dass**
die Spikespuren (17) quer zur Umfangsrichtung (U) des Fahrzeugreifens (1) betrachtet in gleichmäßigen Abständen zueinander verlaufend angeordnet sind.

12. Fahrzeugreifen nach Anspruch 10 oder 11,
**dadurch gekennzeichnet, dass**
je ein Spike jeweils im mittleren Bereich der Profilblöcke (9, 10) beziehungsweise der Schulterblöcke (2, 3) angeordnet ist.

## Claims

1. Vehicle tyre (1) for a motor vehicle, with:
- shoulder blocks (2, 3) going over into the side face of the vehicle tyre (1), wherein, as seen in the circumferential direction (U), a short shoulder block (2) is respectively arranged following a long shoulder block (3) alternately,
- at least one row of blocks (4, 5, 6), which runs in the circumferential direction (U) of the vehicle tyre (1) and has in the region of a ground contact area (12) that is divided by a geometrical centre line (11) profile blocks (9, 10) that are delimited from one another and with respect to the shoulder blocks (2, 3) by grooves (7, 8),
**characterized in that**
two profile blocks (9, 10), neighbouring one another in the circumferential direction (U) of the vehicle tyre (1) and respectively having approximately the same lateral width (13), of a row of blocks (4, 5, 6) have a lateral offset in relation to one another with respect to the geometrical centre line (11) of the vehicle tyre (1), so that the lateral offset is respectively within a row of blocks (4, 5, 6), wherein the profile blocks (9, 10) of a row of blocks (4, 5, 6) respectively have the same geometrical forms.

2. Vehicle tyre according to Claim 1,
**characterized in that**
the vehicle tyre (1) is an asymmetrical vehicle tyre (1), in which the profile blocks (9, 10) of one half of the ground contact area (12) have different geometries than the profile blocks (9, 10) of the other half of the ground contact area (12).

3. Vehicle tyre according to Claim 1,
**characterized in that**
as seen in its running direction (L), overall the profile of the vehicle tyre (1) is directional.

4. Vehicle tyre according to Claim 1 or 2,
**characterized in that**
as seen transversely in relation to the circumferential direction (U) of the vehicle tyre (1), each short shoulder block (2) of one side is assigned a long shoulder block (3) of the opposite, other side, so that the sum of the transverse stiffnesses of the shoulder blocks (2, 3) in a lateral profile portion is equal to the sum of the transverse stiffnesses in a profile portion preceding or following in the circumferential direction (U) of the vehicle tyre (1).

5. Vehicle tyre according to one of the preceding claims,
**characterized in that**
the profile blocks (9, 10) have polygonal, C- or S-shaped geometries with sipes (14, 15) incorporated therein.

6. Vehicle tyre according to one of the preceding claims,
**characterized in that**
transverse grooves (8) formed between two neighbouring profile blocks (9, 10) form an angle of between 13° and 90° with the geometrical centre line (11) of the vehicle tyre (1).

7. Vehicle tyre according to one of the preceding claims,
**characterized in that**
transverse grooves (8) formed between two neighbouring profile blocks (9, 10) form an angle of between 30° and 70° with the geometrical centre line (11) of the vehicle tyre (1).

8. Vehicle tyre according to one of the preceding claims,
**characterized in that**
the profile structure of the entire vehicle tyre (1) is configured overall in a serrated manner.

9. Vehicle tyre according to one of the preceding claims,
**characterized in that**
a number of profile blocks (9, 10) of a row of blocks (4, 5, 6) have an area of the same size.

10. Vehicle tyre according to one of the preceding claims,
**characterized in that**
the vehicle tyre (1) is a winter tyre provided with spikes and the spikes (16) that are included in the profile blocks (9, 10) and/or in the shoulder blocks (2, 3) are arranged along geometrical spike tracks (17) running along in the circumferential direction (U) of the vehicle tyre (1).

11. Vehicle tyre according to Claim 10,
**characterized in that**
as seen transversely in relation to the circumferential direction (U) of the vehicle tyre (1), the spike tracks (17) are arranged running at uniform intervals from one another.

12. Vehicle tyre according to Claim 10 or 11,
**characterized in that**
there is a spike respectively arranged in the middle region of the profile blocks (9, 10) or of the shoulder blocks (2, 3).

## Revendications

1. Bandage (1) pour roue de véhicule automobile, présentant :
des blocs d'épaulement (2, 3) qui se prolongent dans la surface latérale du bandage (1) pour roue de véhicule, un court bloc d'épaulement (2) étant disposé chaque fois à la suite d'un long bloc d'épaulement (3) dans la direction périphérique (U),
au moins une rangée (4, 5, 6) de blocs qui s'étend dans la direction périphérique (U) du bandage (1) pour roue de véhicule et qui présente au niveau d'une surface (12) d'appui au sol divisée par une ligne géométrique centrale (11) des blocs profilés (9, 10) délimités les uns par rapport aux autres et par rapport aux blocs d'épaulement (2, 3) par des rainures (7, 8), **caractérisé en ce que**
deux blocs profilés (9, 10) d'une rangée (4, 5, 6) de blocs qui présentent sensiblement la même surface latérale (13) et qui sont voisins les uns des autres dans la direction périphérique (U) du bandage (1) pour roue de véhicule présentant pas rapport à la ligne géométrique centrale (11) du bandage (1) pour roue de véhicule un décalage latéral mutuel tel que le décalage latéral est situé à l'intérieur d'une rangée (4, 5, 6) de blocs, les blocs profilés (9, 10) d'une rangée (4, 5, 6) de blocs présentant tous la même forme géométrique de base.

2. Bandage pour roue de véhicule selon la revendication 1, **caractérisé en ce que** le bandage (1) pour roue de véhicule est un bandage (1) pour roue de véhicule asymétrique dans lequel les blocs profilés (9, 10) d'une moitié de la surface (12) d'appui au sol présentent d'autres géométries que les blocs profilés (9, 10) de l'autre moitié de la surface (12) d'appui au sol.

3. Bandage pour roue de véhicule selon la revendication 1, **caractérisé en ce que** le profilé du bandage (1) pour roue de véhicule est globalement orienté par rapport à sa direction d'avancement (L).

4. Bandage pour roue de véhicule selon les revendications 1 ou 2, **caractérisé en ce qu'**un long bloc d'épaulement (3) d'un côté situé face à un court bloc d'épaulement (2) du côté opposé dans la direction périphérique (U) du bandage (1) pour roue de véhicule de telle sorte que la somme des rigidités transversales des blocs d'épaulement (2, 3) dans une partie latérale du profilé soit identique à la somme des rigidités transversales d'une partie précédente ou suivante du profilé dans la direction périphérique (U) du bandage (1) pour roue de véhicule.

5. Bandage pour roue de véhicule selon l'une des revendications précédentes, **caractérisé en ce que** les blocs profilés (9, 10) présentent une géométrie polygonale, en forme de C ou en forme de S, dans laquelle sont ménagées des lamelles (14, 15).

6. Bandage pour roue de véhicule selon l'une des revendications précédentes, **caractérisé en ce que** des rainures transversales (8) formées entre deux blocs profilés (9, 10) voisins forment avec la ligne géométrique centrale (11) du bandage (1) pour roue de véhicule un angle compris entre 13° et 90°.

7. Bandage pour roue de véhicule selon l'une des revendications précédentes, **caractérisé en ce que** des rainures transversales (8) formées entre deux blocs profilés (9, 10) voisins forment avec la ligne géométrique centrale (11) du bandage (1) pour roue de véhicule un angle compris entre30° et 70°.

8. Bandage pour roue de véhicule selon l'une des revendications précédentes, **caractérisé en ce que** la structure du profil de l'ensemble du bandage (1) pour roue de véhicule est globalement en dents de scie.

9. Bandage pour roue de véhicule selon l'une des revendications précédentes, **caractérisé en ce que** plusieurs blocs profilés (9, 10) d'une rangée (4, 5, 6) de blocs présentent la même superficie.

10. Bandage pour roue de véhicule selon l'une des revendications précédentes, **caractérisé en ce que** le bandage (1) pour roue de véhicule est un pneu d'hiver doté de clous et **en ce que** les clous (16) repris dans les blocs profilés (9, 10) et/ou les blocs d'épaulement (2, 3) sont disposés le long de lignes géométriques (17) de clous qui s'étendent dans la direction périphérique (U) du bandage (1) pour roue de véhicule.

11. Bandage pour roue de véhicule selon la revendication 10, **caractérisé en ce que** les lignes (17) de clous sont disposées à des distances mutuelles uniformes dans la direction transversale à la direction périphérique (U) du bandage (1) pour roue de véhicule.

12. Bandage pour roue de véhicule selon les revendications 10 ou 11, **caractérisé en ce que** chaque clou est disposé dans la partie centrale des blocs profilés (9, 10) ou des blocs d'épaulement (2, 3).
